# EUROPÄISCHE PATENTANMELDUNG

(11) **EP 1 111 373 A2**
(43) Veröffentlichungstag der Anmeldung: **27.06.2001**
(21) Anmeldenummer: 00127155.0
(22) Anmeldetag: 12.12.2000
(51) Int. Cl.: G01N 21/55

(54) **Verfahren zur optischen und spektroskopischen Messung der Eigenschaften von festen Materialien und zugehörige Anordnung**

(30) Priorität: 22.12.1999 DE 19962428
(71) Anmelder: SIEMENS AKTIENGESELLSCHAFT, 80333 München (DE)
(72) Erfinder: Bunic, Valentino, 88131 Lindau (DE); Kessler, Rudolf, Prof., 72762 Reutlingen (DE); Kessler, Waltraud, 72762 Reutlingen (DE); Reinhardt, Torsten, 70567 Stuttgart (DE)

(57) **Zusammenfassung**

Für die Spektroskopie an festen Materialien mit zeitlich und/-oder räumlich variierenden Oberflächen sind für die optischen Messungen bestimmte Maßnahmen notwendig. Erfindungsgemäß erfolgt bei der optischen Messung eine eindeutige Trennung der Information von spekularer und diffuser Reflexion. Dafür sind bei der zugehörigen Anordnung sogenannte fokustolerante Messgeometrien vorhanden.

## Beschreibung

Die Erfindung bezieht sich auf ein Verfahren zur optischen und spektroskopischen Erfassung von Eigenschaften von festen Materialien gemäß dem Oberbegriff des Patentanspruchs 1. Daneben bezieht sich die Erfindung auch auf eine zugehörige Anordnung zur Durchführung des Verfahrens.

Die Spektroskopie hat ich auf verschiedenen Gebieten der Technik als Sensor, beispielsweise zur Qualitätskontrolle bewährt. Dabei werden nach Wechselwirkung von optischer Strahlung in vorgegebenen Wellenlängenbereich mit Materialien die Response-Signale erfasst und ausgewertet.

Ein Anwendungsgebiet für derartige Sensoren ist die Zellstoff- und Papierindustrie. Beispielsweise Holzhackschnitzel oder Altpapierballen als Ausgangsstoffe für die Papierherstellung oder auch Papierbahnen bei der Fertigung liefern spezifische Spektren, die für unterschiedliche Zwecke eingesetzt werden können.

Da in letzteren Fällen die Messobjekte z. B als Schüttgut, das am Sensor vorbeigeführt wird, vorliegen, ändert sich während der Messung der Abstand Sensor - Messobjekt zeitlich und/oder örtlich ständig.

Die nachfolgenden Ausführungen zeigen, wie mit geeigneten verfahrensmäßigen Vorgehensweisen insbesondere eine Qualitätskontrolle von festen Materialien möglich wird und wie bei der zugehörigen Anordnung diesbezügliche Oberflächen-Hardwarelösungen geeignet sind, einen Ausgleich der sogenannten Flattertoleranz ("out-of-focus"-Messung) herbeizuführen bzw. die spektroskopische Tiefenschärfe zu gewährleisten.

In den letzten Jahren ist das Anforderungsprofil an die Qualität der Produktion erheblich gestiegen. In der Regel müssen enge Toleranzen während der laufenden Fertigung eingehalten werden. Üblicherweise werden für die Qualitätskontrolle sogenannte off-line-Verfahren eingesetzt, d. h. es werden punktuell Proben gezogen und diese dann im Labor betriebsnah vermessen. Wünschenswert wäre jedoch eine direkte on-line- oder in-line-Messung im laufenden Produktionsbetrieb. Während diese Messungen bei chemischen Betrieben oder z. B. in Raffinerien schon durchgeführt werden, (wegen der Transparenz und Homogenität der Proben ist dies einfach), finden sich nur wenige bzw. gar keine Beispiele bei der Produktion von festen Materialien oder bei der Herstellung von Oberflächenschichten.

Optische und spektroskopische Methoden erfassen durch die Wechselwirkung von Licht mit der Oberfläche über die selektive Absorption die chemische Zusammensetzung und durch die Messung des Streulichtes auch morphologische Variationen. Beobachtet man durch eine geeignete Anordnung auch die Phasenbeziehungen der Wellen untereinander, so lassen sich über die (auch spektralen) Interferenzen auch Aussagen z. B. über die Schichtdicke von Oberflächenschichten machen.

Prinzipiell sind optische und spektroskopische Methoden besonders geeignet als on-line- und in-line-Messtechniken, da sie sehr schnell und berührungslos arbeiten. Dabei wird Licht bekannter spektraler Verteilung im Wellenlängenbereich 0,2 µm bis 30 µm auf die Probe gelenkt und das reflektierte Licht analysiert.

Probleme bei der spektralen Messung von Festkörpern und Oberflächen entstehen dadurch, dass sowohl spekular als auch diffus reflektiertes Licht detektiert wird und gleichzeitig sowohl Interferenz, Absorption und Streuung mit unbekanntem Verhältnis auftritt.

Dieser Schwierigkeit geht man in der Regel dadurch aus dem Wege, indem man Messobjekte dahingehend auswählt, dass sie entweder nur rein diffus oder nur rein spekular reflektieren und nur rein absorbieren oder nur rein streuen, bzw. das Mischungsverhältnis der Arten konstant gehalten wird. Bei nicht speziell gefertigten Messobjekten hat man es in der Praxis jedoch mehr oder weniger immer mit Überlagerungen zu tun.

Eine weitere Möglichkeit der Lösung des Problems besteht in einer repräsentativen Probennahme und einer anschließenden externen Homogenisierung. Ziel dabei ist, eine reproduzierbare Messgeometrie zu erhalten, bei der alle Phänomene oder Störungen konstant gehalten werden können. Dies wird oft bei Schüttgut angewendet, wenn z. B. Hackschnitzel vor der Vermessung zerkleinert werden. Andernfalls ist aufgrund der unterschiedlichen Geometrie der Hackschnitzel der Einfluss auf die Messung zwischen streuender bzw. diffuser (= Licht mit Wechselwirkung im Substrat) und spekularer Reflexion nicht abzuschätzen.

Ist eine Homogenisierung nicht möglich, so wird häufig die Probe im laufenden Verfahren angehalten und dann unter definierten Messgeometrien vermessen.

Neueren Datums sind Untersuchungen, bei denen mit Hilfe von Versuchsplänen unterschiedliche Messgeometrien in die mathematische Modellbildung integriert wurden, um sie dann anschließend in der Auswertung wieder herauszurechnen. (z. B.: OSC = orthogonal signal correction, erste Ableitung etc.).

Alle genannten Maßnahmen führen jedoch zu einer Störung des Betriebsablaufs bzw. zu unnötigen Erschwernissen bei der mathematischen Modellierung.

Es ist deshalb Aufgabe der vorliegenden Erfindung, dass man von Seiten der Optik Messverfahren und Hardwarelösungen anbietet, die erhöhte Toleranzen in der Messgeometrie bei der Analyse der Information des reflektierten Lichtes ermöglichen.

Die Aufgabe wird hinsichtlich der Messverfahren erfindungsgemäß durch ein Verfahren zur optischen und spektroskopischen Messung der Eigenschaften von festen Materialien nach Anspruch 1 gelöst. Hinsichtlich der Hardware wird die Aufgabe erfindungsgemäß durch eine Anordnung zur optischen und spektroskopischen Messung der Eigenschaften von festen Materialien nach Anspruch 6 gelöst. Vorteilhafte Ausgestaltungen sind jeweils Gegenstand von weiteren Ansprüchen.

Bei dem Verfahren zur Erfassung von Eigenschaften von Materialien durch spektroskopische Messungen nach Anspruch 1 wird bei der spektroskopischen Messung gleichermaßen die spekulare und die diffuse Reflexion an der Materialoberfläche erfasst und in der Detektion und der Messwertverarbeitung eine eindeutige Trennung der Information von spekularer und diffuser Reflexion vorgenommen. Dadurch kann sich auch während der Messung der Abstand der Materialoberfläche zeitlich und/oder örtlich ("out-of-focus-Lage") ändern, ohne dass die Messung dadurch unmöglich wird.

Die Anordnung gemäß Anspruch 6 umfasst eine optische Einrichtung zur Einstrahlung von Licht auf die Materialoberfläche und zur Erfassung des Lichts nach Wechselwirkung mit der Materialoberfläche sowie ein Spektrometer zur Auswertung des empfangenen Lichts. Durch eine fokustolerante Messgeometrie ist auch bei einer zeitlichen und/oder örtlichen Änderung des Abstandes der Materialoberfläche eine Messung möglich.

Durch die Erfindung werden geometrische Messanordnungen geschaffen, die es erlauben, die diffusen Anteile deutlich von den spekularen Anteilen des reflektierten Lichts zu trennen. Zum anderen können mit der Erfindung geometrische Lösungen realisiert werden, die es erlauben, auch außerhalb der Fokusebene ohne Nachführung der Optik trotzdem die gewünschten richtigen Informationen zu erhalten. Im Fachjargon wird dabei von einer so genannten Flatteramplitude oder Flattertoleranz gesprochen. Die Flattertoleranz in einer Apparatur ist die Amplitude (oder Toleranz), die es erlaubt, das Messgerät oder das Substrat in eine Richtung zu verschieben, ohne dass der Informationsgehalt des reflektierten Lichts sich ändert.

Anhand der Zeichnung werden nachfolgend mehrere in Prinzipdarstellung gezeigte Ausführungsbeispiele näher erläutert. Es zeigen:
- FIG 1: eine Anordnung zur Messung der spektralen Interferenz bei einer Folie.
- FIG 2: eine Anordnung zur Messung der spektralen Interferenz bei Hackschnitzeln,
- FIG 3: eine Anordnung mit einem polarisierenden Stahlteiler,
- FIG 4: Schattenfleck und Beleuchtungsfleck einer Standardanordnung,
- FIG 5: die aktive Zone bei zwei verschiedenen Detektorwinkeln,
- FIG 6: eine Anordnung mit Lampenspiegel,
- FIG 7: eine Anordnung mit Detektorspiegel,
- FIG 8: eine Anordnung mit Prisma.

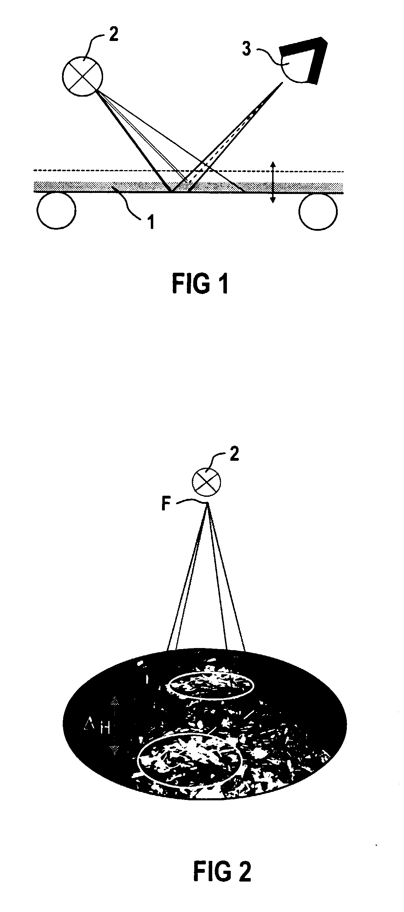

Zwei typische Beispiele von Messungen dafür zeigen die in den FIG 1 und 2 dargestellten Anordnungen.

Bei dem in FIG 1 gezeigten Ausführungsbeispiel der erfindungsgemäßen Anordnung wird durch die Messung der spektralen Interferenz in einer Anordnung 45R45 (45° Beleuchtungswinkel, 45° Detektionswinkel) z. B. bei einer Folie 1 die Schichtdicke d einer Beschichtung on-line vermessen. Die Folie 1 wird hierzu von einer Quelle 2 (Lampe) mit Licht bestrahlt. Das von der Folie 1 reflektierte Licht wird von einem Detektor 3 erfasst. Aufgrund der Bandgeschwindigkeit kommt es vor, dass die Folie 1 flattert, d. h. sich außerhalb des Fokusses F der geometrischen Messanordnung bewegt. Trotzdem sollte noch die Schichtdicke d aus den Daten des reflektierten Lichtes zweifelsfrei bestimmt werden können.

Bei der in FIG 2 dargestellten Anordnung werden Hackschnitzel 4 on-line auf dem Förderband spektral charakterisiert (Art des Holzes, Feuchte, Alter, Ligningehalt etc.). Wichtig ist dabei die Messung der diffusen Reflexion, weil nur hier die chemischen und morphologischen Kenngrößen eine Rolle spielen. Allerdings werden je nach Lage der Hackschnitzel 4 zum Detektor unterschiedliche Anteile an spekularem Licht mit geringer Tiefenwechselwirkung und diffuser Reflexion erhalten. Gezeigt ist eine Anordnung 0R0 (d. h. im 0°-Winkel beleuchtet und im 0°-Winkel detektiert) bzw. diffusRdiffus. Die Flatteramplitude ist hier definiert durch die Toleranz der Messanordnung, bei der die Variation der Höhe und der Größe der Hackschnitzel 4 keine Rolle spielt. Außerhalb dieses Bereiches wird die Information unter anderem aufgrund von spekularen Anteilen gestört.

Die Beispiele zeigen, dass die Lösung der Probleme durch zwei grundlegende Maßnahmen erfolgen kann:
Eindeutige Trennung der Information von spekularer und diffuser Reflexion und/oder
fokustolerante Messgeometrien

Im Folgenden sollen einige typische, bereits erprobte Ausführungsbeispiele gezeigt werden.

Typische geometrische Anordnungen für die Messung des spekular reflektierten Lichtes sind 0R0 und insbesondere 45R45 Anordnungen. In der Industrie werden diese Anordnungen benutzt, um spiegelnde Oberflächen zu vermessen. Eine Flattertoleranz kann dadurch erzeugt werden, dass der Beleuchtungsfleck wesentlich größer ist als der Detektionsfleck (oder umgekehrt). Eine noch eindeutigere Zuordnung erhält man, wenn gleichzeitig polarisiertes Licht verwendet wird und die Beleuchtung und die Detektion mit der gleichen Polarisation erfolgt. Voraussetzung für diese Anordnung ist, dass die Beleuchtung farbgetreu über den gesamten Beleuchtungsfleck ist. Damit lassen sich Flatteramplituden im Zentimeterbereich realisieren.

Rauhe Oberflächen besitzen aufgrund der Verteilung der Elementarspiegel sowohl spekulare als auch diffuse Reflexionsanteile, wobei die Anteile an diffuser und gerichteter Reflexion unterschiedlich sind.

Im einfachsten Fall benutzt man eine goniometrische Anordnung der Spektrometer ("spektrale Goniometrie" z. B. 45R45 mit 45R0 mit 45R0 seitlich usw.) und erfasst somit über den Raum verteilt mit unterschiedlichen Gewichtungen die spekularen und diffusen Anteile. Mit Hilfe der multivarianten Analyse oder über andere mathematische Verfahren lassen sich die spekularen Anteile von den diffusen separieren.

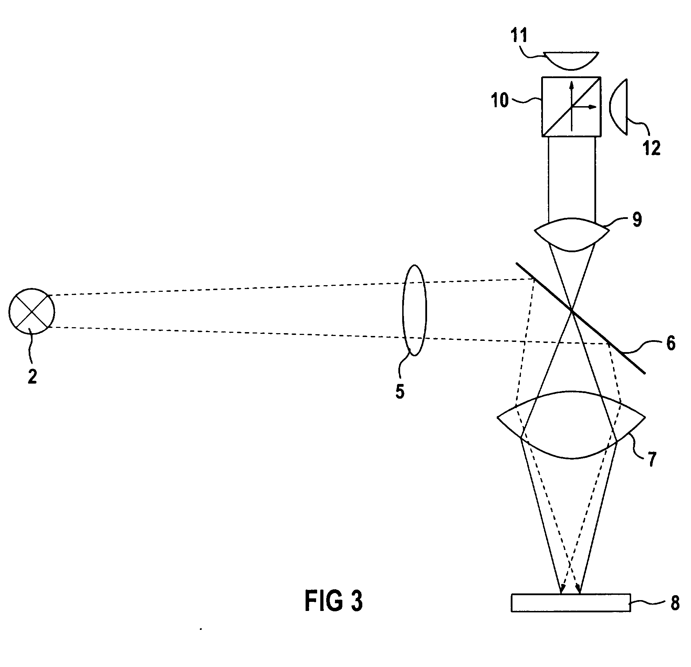

Eine andere Möglichkeit die spekularen von den diffusen Anteilen zu trennen, ist deren Verhalten mit polarisiertem Licht. Spekular reflektiertes Licht behält bei der Reflexion die Polarität, während diffuses Licht aufgrund der Streuung die Polarisation verliert. Durch eine Messung jeweils mit parallelen und gekreuzten (auch andere Winkel möglich) Polarisatoren können so die Einzelteile bestimmt werden. Eine besonders vorteilhafte Art ist die Verwendung eines polarisierenden Strahlteilers, z. B. eines Wollaston-Prismas. Durch den Aufbau des Prismas können die einzelnen Teilstrahlen getrennt werden und dann spektral vermessen werden. (FIG 3). Mit Hilfe dieser Anordnung können Defektstellen (= Streuzentren) in einer Schicht neben der spektralen Interferenz erfasst werden. Gleichzeitig erlaubt die Quantifizierung der spekularen und der diffusen Anteile eine hohe Flattertoleranz von mehreren Zentimetern.

In FIG 3 ist ein Beispiel für die Trennung Trennung von spekularen und diffusen Anteilen durch Verwendung eines polarisierenden Strahlteilers 10 gezeigt. Der polarisierende Strahlteiler 10 ist im dargestellten Ausführungsbeispiel als Wollaston-Prisma ausgeführt. Das von einer Lichtquelle 2 emittierte Licht ist nach Durchgang durch einen Polarisator 5 entsprechend polarisiert. Das polarisierte Licht trifft auf einen Spiegel 6 und wird durch eine Linse 7 auf die Probe 8 fokusiert. Das Licht wird vom Messobjekt 8 (Probe) reflektiert und wird über die Linse 7 und eine weitere Linse 9 in das Wollaston-Prisma 10 geführt. Im Wollaston-Prisma 10 (polarisierender Strahlteiler) wird das Licht aufgespalten und Spektrometern 11 und 12 zur Spektralanalyse zugeführt.

Bei Materialien mit rauher Oberfläche, deren Streuzentren geometrische Abmessungen besitzen, die wesentlich größer als die Wellenlänge des Lichtes sind, werden immer spekulare Anteile im reflektierten Licht vorhanden sein. Ziel einer Messung der diffusen Reflexion, in der die morphologischen und chemischen Parameter enthalten sind, ist die Ausblendung des spekularen Anteils durch eine geeignete Anordnung der Messgeometrie.

Hauptaugenmerk der Entwicklung liegt auf der Erzielung einer großen Flattertoleranz, die notwendig ist, auch Schüttgut on-line zu vermessen. Während die bisherigen Anordnungen eine Flatteramplitude von etwa 1 cm aufweisen, liegen die Möglichkeiten bei einem Messkopf in 0R0 Anordnung wesentlich höher.

Maximale Flattertoleranz ist nur in der Null-Null-Anordnung erreichbar oder in Anordnungen, bei denen die 0R0 Anordnung (oder nahe 0R0 bzw. 0R45 und umgekehrt) zur geometrischen Oberfläche geneigt ist. Das bedeutet, dass die Lichtquelle und der Detektor auf gleicher optischer Achse sitzen und etwa senkrecht oder geneigt zum Messobjekt 8 sind. Dafür gibt es mehrere mögliche geometrische Anordnungen.

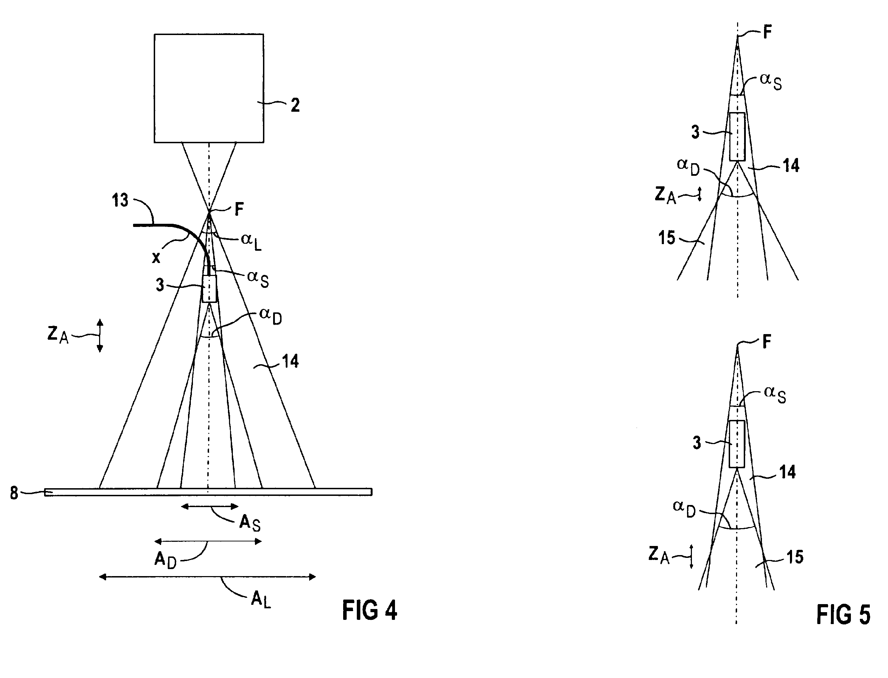

Wie in FIG 4 gezeigt, kann durch die Positionierung eines mit dem Detektor 2 verbundenen Lichtleiters 13 im Strahlengang 14 auf weitere optische Teile verzichtet werden. Somit werden Transmissions- und Reflexionsverluste an Linsen und Spiegeln vermieden. Der Lichtleiter 13 verursacht auf der Probe 8 einen Schatten.

Der Schatten hat mehrere Eigenschaften:
- Abschirmung des spekularen Lichts,
- Ausgleich der Intensitätsveränderung des Signals,
- diffuse Beleuchtung des Messobjekts 8 durch Beugungsinterferenz

Die Intensität des emittierten Lichts einer Quelle 2 nimmt mit dem Quadrat der Entfernung ab. Die Fläche des Leuchtflecks AL nimmt mit dem Quadrat der Entfernung zu. D. h., dass die Leuchtintensität der Probe 8 als Lichtquelle immer den gleichen absoluten Wert hat unabhängig von der Entfernung zur Lichtquelle 2. Mit F ist in den FIG 4 bis 6 wiederum jeweils der Fokus der Messanordnung bezeichnet.

Der Lichtleiter 13 des Detektors 2 weist einen bestimmten Öffnungswinkel auf, unter dem er Licht empfangen, bzw. aussenden kann. Diese sogenannte optische Apertur beträgt bei den üblichen Anordnungen etwa +/- 14°.

Weiterhin ist der Öffnungswinkel α_{L} der Lichtquelle 2 und der Winkel α_{S} des Schattens, den der Lichtleiter 13 erzeugt, vorhanden. Dieser wird bestimmt vom Abstand des Lichtleiters 13 zur Lichtquelle 2 und den geometrischen Abmessungen des Elements, das den Schatten erzeugt.

Im Falle einer Anordnung, bei der der Schattenfleck A_{S} größer ist als der Detektorfleck A_{D}, ist die Flatteramplitude im Prinzip unendlich groß, da nur diffuses Licht oder durch Beugungsinterferenz beleuchtetes Licht vom Messobjekt 8 eingefangen wird. Im Normalfall ist jedoch die Geometrie so angeordnet, dass der Detektorfleck A_{D} einen größeren Öffnungswinkel α_{D} aufweist als der Schatten und somit ein Kreuzungspunkt in der Geometrie entsteht. Damit können abhängig von der Geometrie und Lage der Elementarspiegel des Objekts wieder unterschiedliche Anteile an spekularem Licht eingespiegelt werden, die durch die Maßnahmen wie vorher beschrieben eliminiert werden können. Aufgrund des schrägen Einfallswinkels ist normalerweise eine Messung mit größerer Flatteramplitude dennoch möglich.

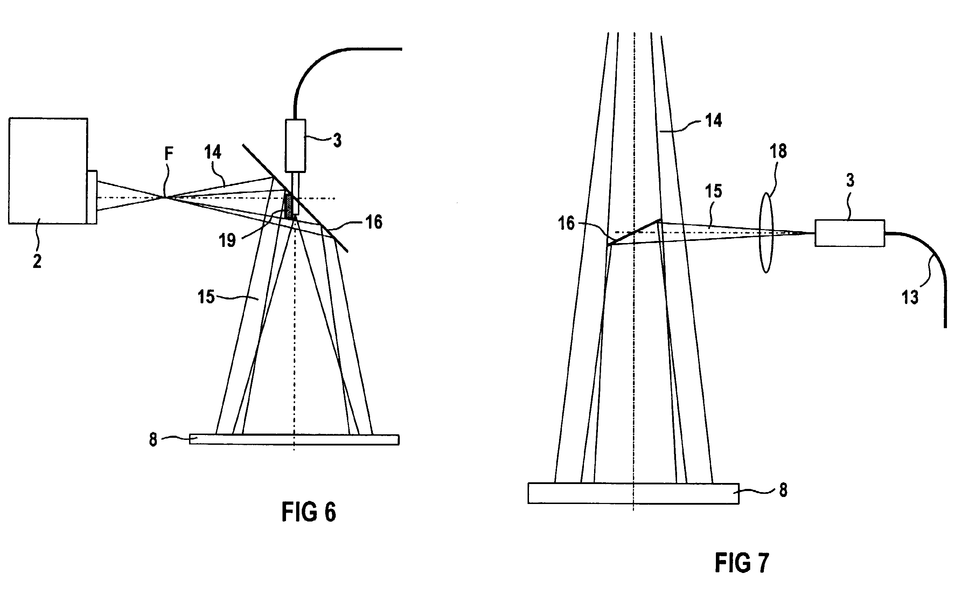

Die beiden Abbildungen in FIG 5 zeigen, dass eine große aktive Zone Z_{A} entsteht, bei der die Messung ohne Störung des spekularen Anteils erfolgen kann, wenn der Öffnungswinkel α_{D} des Detektors 3 gegenüber dem Schattenwinkel α_{S} klein ist.

Diese Geometrie lässt sich auch durch die Verwendung von integrierten Lichtleitern realisieren, z. B. durch konzentrische Anordnung von Detektor- und Belichtungslichtleiter mit unterschiedlichen oder identischen Öffnungswinkeln.

Weiterhin hilfreich ist es, wenn der Abstand zwischen Objekt (Probe 8) und Belichtung bzw. Detektion möglichst groß ist relativ zur notwendigen Flatteramplitude. Dann ist die relative Änderung der Flatteramplitude klein gegenüber der optischen Information über die große Distanz.

Ausgehend von der tatsächlichen Probenbeschaffenheit muss eine gewünschte Flatteramplitude festgesetzt werden und die Optik des Messkopfs muss auf maximale Signalenergie optimiert werden.

Aus der Position des Lichtleiters 13 im Strahlengang 14 der Lampe 2 ergeben sich folgende Nachteile:
- Lichtleiter starker Licht- und Wärmebelastung ausgesetzt,
- keine Veränderung der Detektoroptik vor dem Lichtleiter möglich,
- Referenzmessung nur mit Schlitten- oder Schwenkbewegung möglich,
- kleinster Lichtleiterradius x durch die Mechanik des Lichtleiters festgelegt.

Insbesondere die Positionierung der Referenzmessung bereitet bei den üblichen on-line-Anwendungen Schwierigkeiten, denn es kann normalerweise nicht davon ausgegangen werden, dass die Referenzmessung oder die Kalibriermessung im Fokus F der geometrischen Messanordnung (also in der Probenebene) stattfinden kann. Die vorher gezeigte Messanordnung erlaubt deshalb noch eine neue Möglichkeit, Referenzmessungen ohne Probleme in die on-line-Messung zu integrieren. In den FIG 6 bis 8 werden deshalb Messanordnungen gezeigt, die es erlauben, die Referenzmessung in den Strahlengang 14 zu integrieren ohne dabei die Probenebene zu stören.

Lenkt man den Lichtstrahl der Quelle 2 (Lampe) mit einem 45°-Planspiegel 16 nach unten zur Probe 8 um, kann der Lichtleiter 13 des Detektors 3 in einer Bohrung im Umlenkspiegel 16 angebracht werden (Messanordnung mit Lampenspiegel gemäß FIG 6). Mit 19 ist in der in FIG 6 gezeigten Messanordnung ein Schattenblech bezeichnet.

Daraus ergeben sich folgende Vorteile:
- kleiner Schatten möglich,
- Lichtquelle 2 in horizontaler Stellung,
- keine Licht- und Wärmebelastung des Lichtleiters 13,
- Einsatz von Linsen vor dem Detektor 3 möglich.

Nachteile dieser Messanordnung sind:
- Aufwendige optische Justage nötig,
- Energieverluste am Umlenkspiegel 16,
- Schatten ist nicht mittig im Leuchtfleck,
- Umlenkspiegel 16 kann chromatische Effekte erzeugen,
- Umlenkspiegel 16 kann verschmutzten,
- Referenz nur mit Schlitten- oder Schwenkbewegung möglich.

Setzt man einen Umlenkspiegel 16 zum Detektor 3 ein (Messanordnung mit Detektorspiegel gemäß FIG 7), ergibt sich ein optischer Strahlengang, der einem astronomischen Spiegelteleskop ähnlich ist.

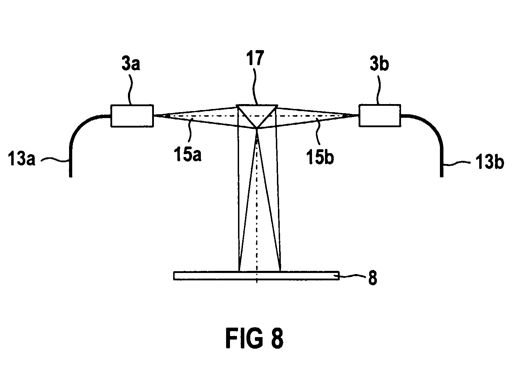

Durch einen geeigneten Umlenkspiegel, beispielsweise ein verspiegeltes Prisma 17, lassen sich auch mehrere Detektoren, z. B. zwei Detektoren 3a und 3b, anbringen (Messanordnung gemäß FIG 8). Der Strahlengang der beiden Detektoren 3a und 3b ist mit 15a und 15b bezeichnet. Mit der optionalen Verwendung einer Linse 18 im Strahlengang 15 des Detektors 3 (FIG 7) lässt sich auch der Öffnungswinkel in bestimmten Bereichen variieren.

Die Referenzmessung lässt sich in der Messanordnung gemäß FIG 7 sehr einfach gestalten, indem die Rück- bzw. Oberseite des Umlenkspiegels 16 dazu verwendet wird. Sie lässt sich mit der Referenzsubstanz beschichten. Dann reicht zur Referenzmessung ein elektrischer Drehmagnet, der den Umlenkspiegel 16 um 90° dreht. Der Detektor 3 sieht dann die beleuchtete Referenzrückseite des Umlenkspiegels 16.

Dadurch, dass der Detektor 3 nicht im Strahlengang 14 der Lichtquelle 2 sitzt, lassen sich Optiken zur Anpassung des Detektorwinkels einsetzen.

## Patentansprüche

1. Verfahren zur Erfassung von Eigenschaften von Materialien durch spektroskopische Messungen, wobei sich während der Messung der Abstand der Materialoberfläche zeitlich und/oder örtlich ändert ("out-of-focus-Lage"),
**dadurch gekennzeichnet,**
dass bei der spektroskopischen Messung gleichermaßen die spekulare und die diffuse Reflexion an der Materialoberfläche erfasst wird und dass in der Detektion und der Messwertverarbeitung eine eindeutige Trennung der Information von spekularer und diffuser Reflexion vorgenommen wird.

2. Verfahren nach Anspruch 1,
**dadurch gekennzeichnet,**
dass fokustolerante Messgeometrien verwendet werden.

3. Verfahren nach Anspruch 1 oder Anspruch 2,
**gekennzeichnet** durch spektroskopische Messungen an Holzhackschnitzeln.

4. Verfahren nach Anspruch 1 oder Anspruch 2,
**gekennzeichnet** durch spektroskopische Messungen an Altpapierballen.

5. Verfahren nach Anspruch 1 oder Anspruch 2,
**gekennzeichnet** durch spektroskopische Messungen an laufenden Materialbahnen, insbesondere Papierbahnen oder Metallbändern.

6. Anordnung zur Durchführung des Verfahrens nach Anspruch 1 oder einem der Ansprüche 2 bis 5, mit einer optischen Einrichtung zur Einstrahlung von Licht auf die Materialoberfläche und zur Erfassung des Lichts nach Wechselwirkung mit der Materialoberfläche sowie einem Spektrometer zur Auswertung des empfangenen Lichts, **gekennzeichnet**
durch eine fokustolerante Messgeometrie.

7. Anordnung nach Anspruch 5,
**dadurch gekennzeichnet,**
dass Mittel zur Abschirmung des spekularen Lichtes vorhanden sind.

8. Anordnung nach Anspruch 5,
**dadurch gekennzeichnet,**
dass Mittel zum Ausgleich der Intensitätsveränderung des Signals vorhanden sind.

9. Anordnung nach Anspruch 6,
**dadurch gekennzeichnet,**
dass die Messgeometrie Mittel zur diffusen Beleuchtung enthält.

10. Anordnung nach Anspruch 6,
**dadurch gekennzeichnet,**
dass die diffuse Beleuchtung durch Ausnutzung der Beugungsinterferenz am Schattenbildner erfolgt.

11. Anordnung nach Anspruch 6,
**dadurch gekennzeichnet,**
dass in der fokustoleranten Messgeometrie der Abstand Beleuchtung/Detektor und Messobjekt groß gewählt ist, womit die Flatteramplitude klein wird im Vergleich zum Beleuchtung/Detektorabstand.

12. Anordnung nach Anspruch 11,
**dadurch gekennzeichnet,**
dass die Messgeometrie so gewählt ist, dass die Referenzmessung in den Strahlengang integriert ist, wobei weder das Objekt noch die Messanordnung entfernt werden muss.
